# EUROPÄISCHE PATENTSCHRIFT

(11) **EP 2 761 209 B1**
(45) Veröffentlichungstag und Bekanntmachung des Hinweises auf die Patenterteilung: **18.05.2016**
(21) Anmeldenummer: 12728184.8
(22) Anmeldetag: 14.06.2012
(51) Int. Cl.: F16H 61/02

(54) **VERFAHREN ZUM STEUERN EINES AUTOMATGETRIEBES**
METHOD FOR CONTROLLING AN AUTOMATIC TRANSMISSION
PROCÉDÉ POUR COMMANDER UNE BOÎTE DE VITESSES AUTOMATIQUE

(30) Priorität: 28.09.2011 DE 102011114439
(43) Veröffentlichungstag der Anmeldung: 06.08.2014
(73) Patentinhaber: Voith Patent GmbH, 89522 Heidenheim (DE)
(72) Erfinder: DIETZEL, Bernd, 89428 Syrgenstein (DE); HOFFMANN, Rolf, 89555 Steinheim (DE)
(74) Vertreter: Dr. Weitzel & Partner
(86) Internationale Anmeldenummer: PCT/EP2012/002503
(87) Internationale Veröffentlichungsnummer: WO 2013/045002

(56) Entgegenhaltungen:
- EP-A2- 2 218 945
- DE-A1- 19 638 064
- DE-A1-102006 009 589

## Beschreibung

Die vorliegende Erfindung betrifft ein Verfahren zum Steuern des Gangwechsels in einem Automatgetriebe eines mit einem Verbrennungsmotor angetriebenen Kraftfahrzeugs, im Einzelnen gemäß dem Oberbegriff von Anspruch 1.

Automatgetriebe schalten heutzutage nicht nur in Abhängigkeit der Drehzahl des sie antreibenden Verbrennungsmotors beziehungsweise in Abhängigkeit der Drehzahl der Getriebeabtriebswelle, proportional zu der aktuellen Geschwindigkeit des Kraftfahrzeugs von einem aktuellen Gang, auch Ausgangsgang genannt, in einen nächst höheren Gang oder nächst niedrigeren Gang, auch Zielgang genannt, sondern es werden zur Steigerung des Komforts und besonders zur Reduzierung des Kraftstoffverbrauchs des Verbrennungsmotors weitere Größen des Antriebsstrangs oder Umgebungsparameter berücksichtigt, in Abhängigkeit von welchen entschieden wird, ob eine Schaltung durchzuführen ist oder nicht. Beispielsweise beschreibt die Offenlegungsschrift DE 10 2006 009 589 A1, die als nächstliegender Stand der Technik anzusehen ist, eine Auswahl des günstigsten Ganges aus verschiedenen möglichen Gängen, wobei nur derjenige Gang ausgewählt wird, welcher die gewünschte Fahrleistung mit dem geringsten Kraftstoffverbrauch zu liefern in der Lage ist, unter Berücksichtigung eines Getriebe-Wirkungsgrad-Kennfeldes, das die Getriebewirkungsgrade für jeden der in Frage kommenden Gänge ermittelt.

Die Offenlegungsschrift DE 197 03 561 A1 beschreibt eine Einrichtung zum Auswerten von Fahrzeug-, Antriebs- und Betriebsparametern eines Fahrzeugs, um eine Übersetzung eines Getriebes nach vorgegebenen Rechenregeln, Kenngrößen oder Kennfeldern mittels eines Mikroprozessors auszuwählen und einzustellen, wobei aus einer der Fahrgeschwindigkeit entsprechenden Drehzahl eines Antriebsstrangs eine Beschleunigung des Fahrzeugs rechnerisch ermittelt wird. Für unterschiedliche Getriebetypen wird eine einheitliche Einrichtung geschaffen, die für die Auswahl einer Übersetzung und die Schaltung nur wenige, auf das Fahrzeug abzustimmende Parameter benötigt.

Die europäische Patentschrift EP 1 047 889 B1 schlägt vor, auf die konventionelle Schaltpunktbestimmung zu verzichten und durch eine Echtzeitprognose der zu erzielenden Anschlussdrehzahlen im Zielgang zu ersetzen. Die herkömmlichen Datensätze bei konventionellen Schaltprogrammen für Laststufen-, Beschleunigungs- und drehzahlabhängigen Schaltdrehzahlen werden durch das Kennfeld der Verbrennungskraftmaschine ersetzt, insbesondere in Form eines Leistungs-/Drehzahl-Diagramms oder eines Drehmoment-/Drehzahl-Diagramms. Die Schaltung erfolgt zur Ermöglichung eines kraftstoffsparenden Fahrverhaltens bei ausreichender Fahrleistung insbesondere unter Berücksichtigung des Kennfelds des spezifischen Kraftstoffverbrauches.

US 2006/0181409 A1 schlägt vor, bei einem Quad die Schaltpunkte in Abhängigkeit des verwendeten Fahrzeugsschlüssels zu verschieben, um beispielsweise zwischen Sportprogrammen und Arbeitsprogrammen zu unterscheiden.

Obwohl somit verschiedene Schaltstrategien zur Erzielung eines möglichst geringen Kraftstoffverbrauchs eines Kraftfahrzeugs bekannt sind, steht der Kraftstoffverbrauch von Fahrzeugen und der damit verbundene CO₂-Ausstoß immer mehr im Fokus der Entwicklung und es gibt einen Bedarf für neue Schaltstrategien, die eine noch weitere Absenkung des Kraftstoffverbrauchs des Verbrennungsmotors ermöglichen. Dabei sollen Verfahren zum Steuern des Gangwechsels in einem Automatgetriebe zur Verwirklichung neuer Schaltstrategien möglichst ohne zusätzliche Bauteile und insbesondere mit einem Rückgriff auf Größen im Kraftfahrzeug erfolgen, die, wenn möglich, ohnehin einem Getriebesteuergerät, welches einen solchen Gangwechsel in einem Automatgetriebe steuert, zur Verfügung stehen oder dem Getriebesteuergerät mit geringem zusätzlichen Aufwand zur Verfügung gestellt werden können.

Der vorliegenden Erfindung liegt daher die Aufgabe zugrunde, ein Verfahren zum Steuern des Gangwechsels in einem Automatgetriebe eines mit einem Verbrennungsmotor angetriebenen Kraftfahrzeugs anzugeben, mit welchem der durchschnittliche Kraftstoffverbrauch des Kraftfahrzeugs beziehungsweise des Verbrennungsmotors, der das Kraftfahrzeug antreibt, weiter gesenkt werden kann. Das Verfahren soll insbesondere sowohl bei Fahrzeugen anwendbar sein, die ausschließlich mit einem Verbrennungsmotor angetrieben werden, als auch bei sogenannten Hybridfahrzeugen, bei welchen neben einem Verbrennungsmotor auch ein oder mehrere Elektromotoren zum Antrieb des Fahrzeugs zum Einsatz kommen können.

Die erfindungsgemäße Aufgabe wird durch ein Verfahren mit den Merkmalen von Anspruch 1 gelöst. In den abhängigen Ansprüchen sind zweckmäßige und besonders vorteilhafte Ausgestaltungen des erfindungsgemäßen Verfahrens angegeben. Ferner wird ein Getriebesteuergerät angegeben, das eingerichtet ist, um ein erfindungsgemäßes Verfahren auszuführen, wobei das Getriebesteuergerät definitionsgemäß übliche Komponenten, wie Verbindungen zu Aktuatoren im Getriebe, um diese zu betätigen, sowie programmierbare Speicherbausteine umfasst, in welchen ein Programm hinterlegt ist, das in Abhängigkeit von Signalen an Steuergerätseingängen die verschiedenen Steuersignale für die Aktuatoren erzeugt.

Das erfindungsgemäße Verfahren zum Steuern des Gangwechsels in einem Automatgetriebe eines mit einem Verbrennungsmotor angetriebenen Kraftfahrzeugs umfasst die folgenden Schritte:
- Vorgeben von verschiedenen oberen Grenzgeschwindigkeiten des Kraftfahrzeugs, bei welchen bei konstanter oder mit zunehmender Fahrzeuggeschwindigkeit ein Gangwechsel des Automatgetriebes in einen nächst höheren Gang mit vergleichsweise kleinerer Übersetzung zwischen einem Getriebeeingang und einem Getriebeausgang des Automatgetriebes in Vergleich zu dem momentan eingelegten Gang erfolgt;
- Vorgeben von verschiedenen unteren Grenzgeschwindigkeiten des Kraftfahrzeugs, bei welchen mit abnehmender Fahrzeuggeschwindigkeit ein Gangwechsel des Automatgetriebes in einen nächst niedrigeren Gang mit vergleichsweise größerer Übersetzung zwischen dem Getriebeeingang und dem Getriebeausgang im Vergleich zu dem momentan eingelegten Gang erfolgt; wobei
- einer oder jeder oberen Grenzgeschwindigkeit eine untere Grenzgeschwindigkeit zugeordnet ist, die zur Ausbildung einer Schalthysterese eine vorgegebene Differenz unterhalb der oberen Grenzgeschwindigkeit liegt;
- bei Vorliegen der folgenden Bedingungen bei konstanter oder zunehmender Fahrzeugsgeschwindigkeit ein Gangwechsel des Automatgetriebes in einen nächst höheren Gang vorzeitig bereits bei der unteren Grenzgeschwindigkeit oder einer Geschwindigkeit zwischen der einander zugeordneten unteren Grenzgeschwindigkeit und oberen Grenzgeschwindigkeit erfolgt:
   - ein aus der aktuellen Fahrzeugbeschleunigung und/oder aus einer neu vorgegebenen gewünschten Fahrzeugbeschleunigung berechnetes notwendiges Drehmoment des Verbrennungsmotors nach dem Gangwechsel, um die aktuelle Fahrzeugbeschleunigung oder eine vorgegebene relativ verminderte Fahrzeugbeschleunigung erreichen oder beibehalten zu können, kann vom Verbrennungsmotor zur Verfügung gestellt werden;
   - der prognostizierte Kraftstoffverbrauch des Verbrennungsmotors nach dem Gangwechsel ist um ein vorgegebenes Ausmaß geringer, als der aktuelle Kraftstoffverbrauch des Verbrennungsmotors.

Die Übersetzung zwischen dem Getriebeeingang und dem Getriebeausgang kann durch das Verhältnis der Drehzahlen dargestellt werden, das heißt die Drehzahl des Getriebeausgangs geteilt durch die Drehzahl des Getriebeeingangs. In der Regel wird in den niedrigeren Gängen eine Übersetzung von deutlich größer als 1 vorliegen, mit einer entsprechenden Drehmomentüberhöhung vom Getriebeeingang zum Getriebeausgang, und in den höheren und/oder im höchsten Gang kann eine Übersetzung von 1 beziehungsweise etwas größer oder etwas kleiner als 1 vorliegen.

Gemäß einer vorteilhaften erfindungsgemäßen Ausgestaltung wird das erfindungsgemäße Verfahren als Add-on im Rahmen eines bestehenden Schaltprogramms in die Steuerung beziehungsweise das Steuergerät eines Automatgetriebes integriert. Hierzu kann der Gangwechsel im Automatgetriebe durch Ausgabe von Schaltsignalen durch eine Steuervorrichtung, insbesondere dem Getriebesteuergerät, erfolgen, wobei die Steuervorrichtung ein Grundprogramm aufweist, gemäß welchem ein Schaltsignal zum Schalten in den nächst höheren Gang bei Vorliegen der oberen Grenzgeschwindigkeit und ein Schaltsignal zum Schalten in den nächst niedrigeren Gang bei Vorliegen der unteren Grenzgeschwindigkeit erzeugt werden, und die Steuervorrichtung ein zusätzliches Softwaremodul zu dem Grundprogramm oder in dem Grundprogramm aufweist, mittels welchem ein zusätzliches Schaltsignal zum Schalten in den nächst höheren Gang erzeugt wird, wenn bei Vorliegen der erfindungsgemäß abgefragten Bedingungen die obere Grenzgeschwindigkeit noch nicht erreicht ist.

Gemäß einer Ausführungsform des erfindungsgemäßen Verfahrens wird immer dann, wenn die erfindungsgemäß abgefragten Bedingungen vorliegen, die obere Grenzgeschwindigkeit vorübergehend auf die aktuelle Geschwindigkeit reduziert, um dadurch das Schalten auszulösen. Eine solche Reduzierung kann beispielsweise erfolgen, bis die Schaltung ausgelöst wird, wobei anschließend die entsprechende obere Grenzgeschwindigkeit wieder auf ihren ursprünglichen Wert beziehungsweise vorherigen Wert zurückgesetzt wird.

Die Berechnung des notwendigen Drehmoments des Verbrennungsmotors nach dem Gangwechsel erfolgt vorteilhaft in einem dem Verbrennungsmotor zugeordneten Motorkennfeld für einen Arbeitspunkt mit derselben Verbrennungsmotorleistung, oder, wenn ein solcher Arbeitspunkt nicht erreichbar ist, für einen Arbeitspunkt auf der Volllastkennlinie des Verbrennungsmotors im Motorkennfeld.

Günstig ist es, wenn der aktuelle Kraftstoffverbrauch und/oder der prognostizierte Kraftstoffverbrauch aus einem, insbesondere in einem Verbrennungsmotorsteuergerät und/oder Getriebesteuergerät hinterlegten Verbrauchskennfeld des Verbrennungsmotors ermittelt wird. Beispielsweise kann das Verbrauchskennfeld des Verbrennungsmotors verschiedenen Wertepaaren aus Drehmoment und Drehzahl des Verbrennungsmotors Verbrauchswerte des Verbrennungsmotors zuordnen.

Gemäß einer erfindungsgemäßen Ausführungsform sind die Verbrauchswerte ferner als Funktion oder in Abhängigkeit weiterer Betriebsparameter des Fahrzeugs, insbesondere in Abhängigkeit von Wirkungsgraden des Automatgetriebes in verschiedenen Gängen und/oder bei verschiedenen Drehzahlen des Getriebeeingangs und/oder des Getriebeausgangs und/oder Drehzahlverhältnissen zwischen dem Getriebeeingang und dem Getriebeausgang, und/oder in Abhängigkeit von anderen Umgebungsparametern vorgegeben.

Gemäß einer besonders vorzuziehenden Ausgestaltung der Erfindung wird ein Mehrverbrauch durch den zu prüfenden Schaltvorgang selbst berechnet oder aus einem Kennfeld oder Datensatz ausgelesen, und ein Gangwechsel des Automatgetriebes erfolgt in Abhängigkeit dieses Mehrverbrauchs, insbesondere nur dann, wenn der Mehrverbrauch unterhalb eines vorgegebenen Grenzwertes liegt.

Der Kraftstoffmehrverbrauch kann beispielsweise anhand vorgegebener aktuell erfasster oder berechneter Randbedingungen vor der Schaltung ermittelt werden oder es wird ein Datensatz vorgegeben, der für jede Schaltung einen Schätzwert für den Kraftstoffmehrverbrauch umfasst, der durch die Schaltung selbst verursacht wird. Ein solcher Datensatz kann beispielsweise im Getriebesteuergerät gespeichert sein. Die gespeicherten Schätzwerte in dem Datensatz können gemäß einer erfindungsgemäßen Ausführungsform vor der Auslieferung des Fahrzeugs durch Betrieb desselben oder durch Betrieb des Getriebes ermittelt und in dem Datensatz hinterlegt werden, und/oder die Schätzwerte können während des Betriebs des Fahrzeugs erlernt und/oder adaptiert werden, indem der tatsächliche Kraftstoffmehrverbrauch bei einem entsprechenden Schaltvorgang erfasst wird.

Besonders günstig ist es, wenn aus dem prognostizierten Kraftstoffverbrauch und dem prognostizierten Kraftstoffmehrverbrauch durch den Schaltvorgang selbst eine energetische Amortisationszeit berechnet wird, innerhalb von welcher bei Fahrt mit dem Fahrzeug in dem Gang des Automatgetriebes, für welchen der Kraftstoffverbrauch prognostiziert wurde, der prognostizierte Kraftstoffmehrverbrauch durch den Schaltvorgang selbst wieder eingespart würde. Das Schalten kann dann in Abhängigkeit dieser berechneten energetischen Amortisationszeit erfolgen, beispielsweise nur dann, wenn die energetische Amortisationszeit unterhalb eines vorgegebenen Grenzwertes liegt. Der Grenzwert kann absolut vorgegeben werden oder variabel in Abhängigkeit bestimmter aktuell oder prognostizierter nach dem Schaltvorgang vorliegender Randbedingungen.

Die Erfindung greift in die üblicherweise vorgesehene Schalthysterese in Automatgetrieben ein, bei welcher die Schaltpunkte für Rückschaltungen gegenüber den Hochschaltungen um die Schalthysterese niedriger liegen, sodass sich bei gleicher Fahrpedalstellung in Fahrsituationen mit fallender Geschwindigkeit und Rückschaltung ein niedrigeres Motordrehzahlniveau einstellt als in Fahrsituationen mit zunehmender Geschwindigkeit und Hochschaltungen.

Eine solche Schalthysterese ist grundsätzlich wichtig, um ein ständiges Hoch- und Rückschalten, das sogenannte Schaltpendeln, zu vermeiden.

Durch das erfindungsgemäße Verfahren kann nun jedoch erreicht werden, dass in Fahrsituationen mit konstanter beziehungsweise zunehmender Geschwindigkeit Hochschaltungen unter definierten Bedingungen bereits dann durchgeführt werden, wenn der nächst höhere Gang unter sonst gleichen Bedingungen in einer Fahrsituation mit fallender Geschwindigkeit geschaltet wäre, das heißt die Hochschaltung soll dann erfolgen, wenn die Motordrehzahl für den entsprechenden Rückschaltpunkt erreicht oder überschritten wird. Erfindungsgemäß werden die Kriterien derart gewählt, dass es nicht im Anschluss an eine derartige Hochschaltung gleich wieder zu einer Rückschaltung kommt beziehungsweise zu dem sogenannten Schaltpendeln.

Das für die aktuelle Fahrzeugbeschleunigung benötigte Motordrehmoment kann beispielsweise aus dem erfassten oder berechneten aktuellen Motormoment, der erfassten oder berechneten Fahrzeugbeschleunigung und der erfassten oder berechneten Fahrbahnneigung ermittelt werden, insbesondere mittels einer sogenannten Fahrdynamikgleichung. Die Fahrzeugbeschleunigung kann insbesondere sowohl einen positiven Wert aufweisen als auch den Wert Null. Dasselbe gilt für die vorgegebene Fahrzeugbeschleunigung nach dem Gangswechsel.

Gemäß einer erfindungsgemäßen Ausführungsform erfolgt bei einem prognostizierten höheren Verbrauch nach einer Hochschaltung beziehungsweise dann, wenn keine Verbrauchseinsparung nach einer Hochschaltung erzielt werden kann, keine Hochschaltung und es wird auch keine weitere Berechnung bis zum nächsten "normalen" Schaltvorgang bei der oberen Grenzgeschwindigkeit ausgeführt. Alternativ erfolgt eine fortlaufende weitere Berechnung.

Insbesondere in Verbindung mit der Berechnung der energetischen Amortisationszeit ergibt sich eine Schalthysterese in Form der Kraftstoffverbrauchshysterese. Falls erforderlich, kann diese Kraftstoffverbrauchshysterese um einen zusätzlichen Kraftstoffverbrauchsoffset erhöht werden, das heißt, es wird ein vorgegebener Verbrauchswert auf den Kraftstoffverbrauch durch den Gangwechsel selbst oder ein vorgegebener Wert auf die Amortisationszeit aufaddiert oder die Größen werden mit einem entsprechenden Faktor multipliziert.

Gemäß einer Ausführungsform der Erfindung wird im Betrieb des Kraftfahrzeugs erfasst, wie oft innerhalb einer vorgegebenen mit dem Kraftfahrzeug zuletzt zurückgelegten Wegstrecke oder innerhalb einer vorgegebenen gerade abgelaufenen Zeitspanne (das heißt der unmittelbar zurückliegenden Zeitspanne) nach einer Schaltung des Automatgetriebes in einen nächst höheren Gang oder nächst niedrigeren Gang das Automatgetriebe innerhalb eines vorgegebenen Zeitintervalls wieder in den Gang vor der Schaltung zurückgeschaltet wurde, und hieraus kann eine durchschnittliche Rückschalthäufigkeit ermittelt werden. Eine solche Rückschalthäufigkeit innerhalb der abgelaufenen Zeitspanne beziehungsweise der zuletzt zurückgelegten Wegstrecke kann gespeichert werden und das Schalten in Abhängigkeit dieser durchschnittlichen Rückschalthäufigkeit der letzten Zeit beziehungsweise der zuletzt zurückgelegten Wegstrecke erfolgen. Insbesondere wird für verschiedene einzelne Gänge, vorteilhaft für jeden einzelnen Gang mit Ausnahme des höchsten Ganges und/oder des niedrigsten Ganges (beim niedrigsten Gang kann nicht mehr runtergeschaltet werden, so dass es hierfür keine Rückschalthäufigkeit für das Runterschalten gibt, und beim höchsten Gang liegt entsprechend keine Rückschalthäufigkeit für ein Hochschalten vor), eine solche durchschnittliche Rückschalthäufigkeit ermittelt und vorteilhaft gespeichert.

Alternativ kann anstelle der durchschnittlichen Rückschalthäufigkeit die durchschnittliche Rückschaltzeit ermittelt werden, das heißt die Zeitspanne, nach welcher das Automatgetriebe nach einer Schaltung in einen nächst höheren Gang oder in einen nächst niedrigeren Gang wieder in den Gang vor der Schaltung zurückgeschaltet wurde.

Sowohl die durchschnittliche Rückschalthäufigkeit als auch die durchschnittliche Rückschaltzeit beschreiben eine Wahrscheinlichkeit, mit welcher nach einer Schaltung in einen vermeintlich kraftstoffsparenderen Gang aufgrund vorliegender ungünstiger Randbedingungen, beispielsweise bei Fahrten eine Steigung hinauf, wieder in den Ausgangsgang mit höherem Kraftstoffverbrauch zurückgeschaltet wird. Eine solche Rückschaltung erzeugt selbst erneut einen Kraftstoffmehrverbrauch, sodass die Berücksichtigung der Wahrscheinlichkeit der Rückschaltung aus Erfahrungswerten, nämlich der ermittelten durchschnittlichen Rückschaltzeit beziehungsweise der ermittelten durchschnittlichen Rückschalthäufigkeit bei der Entscheidung, ob eine Schaltung durchgeführt werden sollte, günstig ist. Beispielsweise kann der Kraftstoffmehrverbrauch für die Rückschaltung prognostiziert und mit der durchschnittlichen Rückschalthäufigkeit oder der durchschnittlichen Rückschaltzeit gewichtet werden und das Schalten in Abhängigkeit des gewichteten Kraftstoffmehrverbrauchs für die Rückschaltung erfolgen. Auf diese Weise würde das Getriebesteuergerät in hügeligem Gelände die Schaltpunkte von selbst nach oben schieben, während es sie bei einem Einsatz im Flachland ebenso von selbst wieder zu tieferen Drehzahlen hin verschiebt.

Gemäß einer Ausführungsform des erfindungsgemäßen Verfahrens erfolgt das Schalten zudem in Abhängigkeit einer oder mehrerer der nachfolgenden Größen, die zumindest für den Zustand nach der Schaltung prognostiziert werden und insbesondere auch für den aktuellen Zustand, das heißt vor der Schaltung, zum Vergleich mit den prognostizierten Größen erfasst oder berechnet werden:
- Steigung, auf welcher sich das Kraftfahrzeug bewegt
- Fahrzeugbeschleunigung bei aktueller Fahrpedalstellung
- Fahrzeugbeschleunigung bei Vollgas
- Motordrehzahl
- Fahrzeuggeschwindigkeit
- Anschlussdrehzahlen von Schaltelementen im Automatgetriebe
- zeitliche Beschränkung sich einstellender Drehzahlbereiche.

Die einzelnen Größen können in einen Kraftstoffmehrverbrauch umgerechnet werden, insbesondere durch Multiplikation mit einem für jede Größe vorgegebenen Umrechnungsfaktor, und die Schaltung kann dann in Abhängigkeit dieses Kraftstoffmehrverbrauchs erfolgen.

Wenn beispielsweise ein Schätzwert für die Steigung, auf welcher das Fahrzeug fährt, bekannt ist oder erfasst wird, dann kann für jeden der untersuchten Gänge, insbesondere für den nächst höheren Gang, den nächst niedrigeren Gang und den aktuellen Gang die Fahrzeugbeschleunigung bei der derzeitigen Fahrpedalstellung wie auch bei Vollgas prognostiziert werden. Legt man auch für die Beschleunigung einen Umrechnungsfaktor fest, um zu einem zugehörigen Kraftstoffmehrverbrauch zu gelangen, dann kann mit diesem Faktor direkt eingestellt werden, wie viel Kraftstoffmehrverbrauch eine bessere Beschleunigung wert ist. Ebenso kann eine Mindestbeschleunigung festgelegt werden, die im nächsten Gang noch erreicht werden muss, damit in diesen Gang geschaltet werden darf.

Wenn vorliegend vom nächst höheren Gang oder nächst niedrigeren Gang die Rede ist, so umfasst dies gemäß einer erfindungsgemäßen Ausführungsform den physikalischen in dem Automatgetriebe einlegbaren Gang, der die nächst kleinere Übersetzung beziehungsweise die nächst größere Übersetzung im Vergleich zur aktuellen Übersetzung des aktuellen Gangs aufweist. Wenn das Automatgetriebe jedoch auch Sprungschaltungen über mehrere Gänge hinweg zulässt, so kann mit dem nächst höheren Gang oder dem nächst niedrigeren Gang auch ein Zielgang einer solchen Sprungschaltung gemeint sein.

Günstig ist es, wenn dem Automatgetriebe ein Getriebesteuergerät zugeordnet ist, das ein erfindungsgemäßes Verfahren ausführt. Das Getriebesteuergerät kann beispielsweise zumindest eine mit der Abtriebsdrehzahl korrelierende Größe und eine mit einem Betriebszustand des Verbrennungsmotors korrelierende Größe einlesen und auf Grundlage zumindest dieser Größen ein Übersetzungsverhältnissignal zur Einstellung eines Übersetzungsverhältnisses des Automatgetriebes ausgeben. Anstelle oder zusätzlich zu der Abtriebsdrehzahl des Automatgetriebes kann auch die Eingangsdrehzahl des Getriebes beziehungsweise eine mit dieser korrelierende Größe in das Getriebesteuergerät eingelesen werden.

Das Getriebesteuergerät erhält gemäß einer vorteilhaften Ausführungsform zusätzlich Daten des Kraftstoffverbrauchs und insbesondere des Motordrehmoments. Beispielsweise kann das Getriebesteuergerät im Laufe der Betriebszeit des Kraftfahrzeugs beziehungsweise auch bei einem Betrieb vor Auslieferung ein Verbrauchskennfeld des Verbrennungsmotors ermitteln. Alternativ könnte dieses Verbrauchskennfeld auch in einem Datensatz des Getriebesteuergeräts oder eines anderen Steuergeräts, insbesondere des Verbrennungsmotorsteuergeräts, vorgegeben sein. Ein solches Verbrauchskennfeld kann gemäß einer weiteren Ausgestaltung nicht nur den Verbrennungsmotor, insbesondere Dieselmotor, beziehungsweise dessen Parameter berücksichtigen, sondern, zum Beispiel bei einem Parallelhybrid oder seriellen Hybrid, auch Parameter der elektrischen Maschine und/oder von Nebenverbrauchern, insbesondere mit ihren Wirkungsgraden, vorteilhaft auch im Schlepp- beziehungsweise Bremsbetrieb.

Die Erfindung soll nachfolgend anhand eines Ausführungsbeispiels weiter erläutert werden.

Es zeigen:
- Figur 1: eine schematisiert Darstellung eines Antriebsstranges mit einem Verbrennungsmotor und einem Automatgetriebe sowie mit einem Verbrennungsmotorsteuergerät und einem erfindungsgemäß eingerichteten Getriebesteuergerät;
- Figur 2: eine ebenfalls schematisierte Darstellung eines Motorkennfeldes;
- Figur 3: die Schalthysterese in einem Automatgetriebe.

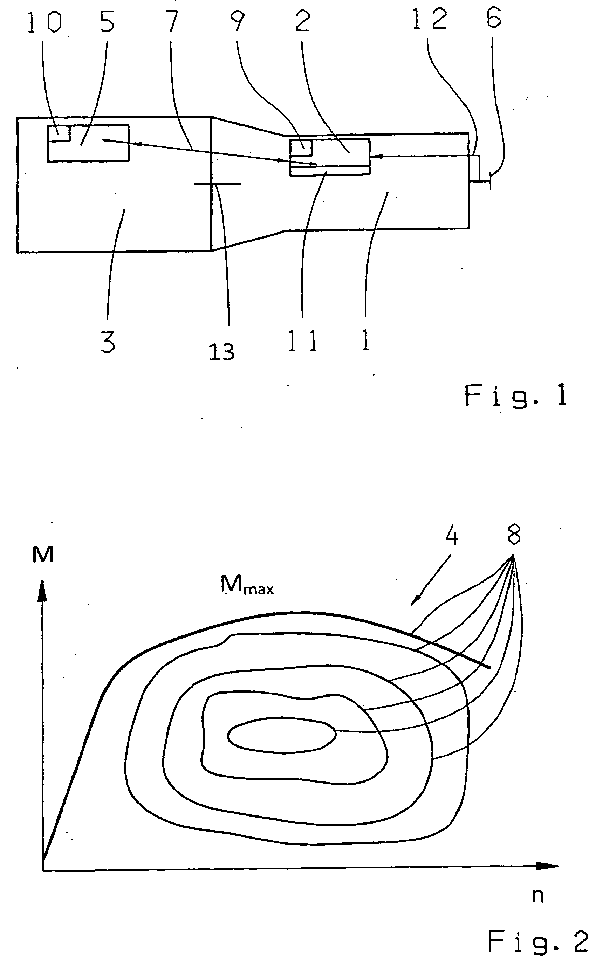

In der Figur 1 ist ein ausgangsseitig an einem Verbrennungsmotor 3 angeschlossenes Automatgetriebe 1 dargestellt, welches eine Getriebeeingangswelle 13 sowie eine Getriebeausgangswelle 6 aufweist. Der Verbrennungsmotor 3 treibt die Getriebeeingangswelle 13 an, welche wiederum die Getriebeausgangswelle 6 antreibt, und zwar mit einem Drehzahlverhältnis zwischen der Getriebeeingangswelle 13 und der Getriebeausgangswelle 6, das durch den im Automatgetriebe 1 eingelegten Gang bestimmt wird. Der Verbrennungsmotor 3 wird mittels des Motorsteuergeräts 5 gesteuert. Das Automatgetriebe 1 wird mittels des Getriebesteuergeräts 2 gesteuert. Motorsteuergerät 5 und Getriebesteuergerät 2 sind über einen Datenbus 7 verbunden, sodass das Getriebesteuergerät 2 zur Durchführung seiner Steuerungsaufgaben auf ein in einem Motorkennfeldspeicher 10 in der Motorsteuerung 5 hinterlegtes Motorkennfeld 4 zugreifen kann, welches exemplarisch in der Figur 2 dargestellt ist. Auf der horizontalen Achse des Diagramms ist die Drehzahl des Antriebsmotors 3 aufgetragen und auf der vertikalen Achse das vom Verbrennungsmotor erzeugte Drehmoment. Jeder Kombination aus Drehzahl und Drehmoment ist ein spezifischer Kraftstoffverbrauch zugeordnet. Linien konstanten Verbrauchs sind mit 8 bezeichnet. Ein solches Motorkennfeld 4 wird auch als Muscheldiagramm bezeichnet.

Die obere dick ausgezogene Linie zeigt das maximale bei einer Drehzahl abgebbare Motordrehmoment.

Zurückkommend auf die Figur 1 umfasst das Getriebesteuergerät 2 einen Datensatz 9, der für jede Schaltung einen Schätzwert für den Kraftstoffmehrverbrauch enthält, der durch die Schaltung selbst verursacht wird.

Mit 11 ist eine Berechnungseinrichtung des Getriebesteuergeräts 2 bezeichnet. Die Berechnungseinrichtung 11 kann nun anhand des Motorkennfelds 4 im Motorkennfeldspeicher 10, das als alternativ auch im Getriebesteuergerät 2 abgelegt sein könnte, beispielsweise nachdem es erlernt wurde, und dem Datensatz 9 mit den Schätzwerten für den Kraftstoffmehrverbrauch bei einer Schaltung ermitteln, ob sich eine Schaltung hinsichtlich des langfristig günstigsten Kraftstoffverbrauchs des Verbrennungsmotors 3 lohnt oder nicht. In Abhängigkeit dieser Berechnung wird die Schaltung im Automatgetriebe 1 durchgeführt.
Als weitere Eingangsgröße für die Berechnungseinrichtung 11 beziehungsweise das Getriebesteuergerät 2 kann die Getriebeabtriebsdrehzahl und/oder die Drehzahl der Getriebeeingangswelle 13 denen. Der Eingang des Getriebesteuergeräts 2 für die Getriebeabtriebsdrehzahl ist beispielhaft mit 12 bezeichnet.

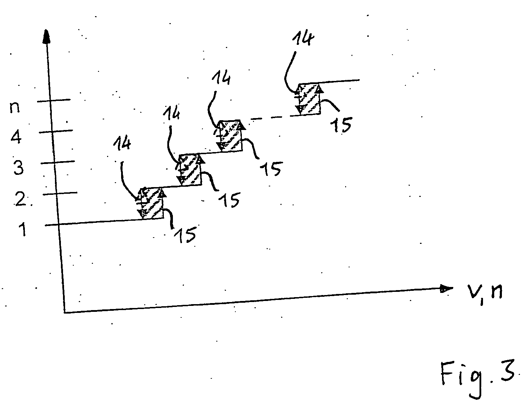

In der Figur 3 ist die übliche Schalthysterese eines Automatgetriebes dargestellt. Auf der waagerechten Achse ist die Fahrzeuggeschwindigkeit beziehungsweise die Drehzahl der Getriebeabtriebsseite, vorliegend als Getriebeausgang bezeichnet, dargestellt, wohingegen auf der senkrechten Achse die einzelnen im Automatgetriebe einstellbaren Gänge, denen verschiedene Übersetzungsverhältnisse zwischen Getriebeeingang und Getriebeausgang zugeordnet sind, dargestellt sind. Für alle Gänge, mit Ausnahme des untersten Ganges (Gang 1), ist eine untere Grenzgeschwindigkeit angegeben, bei welcher mit abnehmender Fahrzeuggeschwindigkeit beziehungsweise Drehzahl des Getriebeausgangs in den nächst niedrigeren Gang geschaltet wird. Diese unteren Grenzgeschwindigkeiten sind vorliegend mit 14 bezeichnet.

Ferner ist für alle Gänge, mit Ausnahme des höchsten Ganges, jeweils eine obere Grenzgeschwindigkeit 15 angegeben, bei welcher bei konstanter oder mit zunehmender Fahrzeuggeschwindigkeit beziehungsweise konstanter oder zunehmender Drehzahl des Getriebeausgangs, welche mit der Fahrzeuggeschwindigkeit korreliert, ein Gangwechsel des Automatgetriebes in einen nächst höheren Gang erfolgt. Vorliegend ist der höchste Gang mit n bezeichnet, wobei die Darstellung derart zu verstehen ist, dass der höchste Gang der fünfte Gang sein kann oder ein höherer Gang mit entsprechend über dem vierten Gang zwischengeschalteten Gängen. Die Anzahl der im Automatgetriebe vorgesehenen Gänge ist jedoch für die vorliegende Erfindung nicht beschränkend, beispielsweise können sieben, acht oder mehr Gänge vorgesehen sein.

Die Schalthysterese, die für die verschiedenen Schaltvorgänge vorgegeben ist, um ein Schaltpendeln zu vermeiden, ist schraffiert dargestellt.

Erfindungsgemäß wird nun beim Hochschalten unter bestimmten Voraussetzungen bereits innerhalb der gezeigten Bereiche der Schalthysterese hoch geschaltet, frühestens bereits bei Erreichen der unteren Grenzgeschwindigkeit. Dies ist durch die nicht gefüllten Pfeilspitzen auf den Schaltlinien der unteren Grenzgeschwindigkeiten 14 dargestellt. Da somit die Schaltpunkte weiterhin in einem Bereich des bereits abgestimmten Schaltprogramms eines Automatgetriebes liegen, ist eine erneute Fahrzeugabstimmung beziehungsweise Getriebeabstimmung für die Implementierung des erfindungsgemäßen Verfahrens nicht erforderlich. Zugleich wird durch das frühere Schalten auf das niedrigere Motordrehzahlniveau der Kraftstoffverbrauch des Verbrennungsmotors reduziert.

## Patentansprüche

1. Verfahren zur Steuerung des Gangwechsels in einem Automatgetriebe (1) eines mit einem Verbrennungsmotor (3) angetrieben Kraftfahrzeugs, mit den folgenden Schritten:
1.1 Vorgeben von verschiedenen oberen Grenzgeschwindigkeiten (15) des Kraftfahrzeugs, bei welchen bei konstanter oder mit zunehmender Fahrzeuggeschwindigkeit ein Gangwechsel des Automatgetriebes (1) in einen nächst höheren Gang mit vergleichsweise kleinerer Übersetzung zwischen einem Getriebeeingang (13) und einem Getriebeausgang (6) des Automatgetriebes (1) in Vergleich zu dem momentan eingelegten Gang erfolgt;
1.2 Vorgeben von verschiedenen unteren Grenzgeschwindigkeiten (14) des Kraftfahrzeugs, bei welchen mit abnehmender Fahrzeuggeschwindigkeit ein Gangwechsel des Automatgetriebes (1) in einen nächst niedrigeren Gang mit vergleichsweise größeren Übersetzung zwischen dem Getriebeeingang (13) und dem Getriebeausgang (6) im Vergleich zu dem momentan eingelegten Gang erfolgt; wobei
1.3 einer oder jeder oberen Grenzgeschwindigkeit (15) eine untere Grenzgeschwindigkeit (14) zugeordnet ist, die zur Ausbildung einer Schalthysterese eine vorgegebene Differenz unterhalb der oberen Grenzgeschwindigkeit (15) liegt;
**dadurch gekennzeichnet, dass**
1.4 bei Vorliegen der folgenden Bedingungen bei konstanter oder zunehmender Fahrzeugsgeschwindigkeit ein Gangwechsel des Automatgetriebes (1) in einen nächst höheren Gang vorzeitig bereits bei der unteren Grenzgeschwindigkeit (14) oder einer Geschwindigkeit zwischen der unteren Grenzgeschwindigkeit (14) und der oberen Grenzgeschwindigkeit (15) erfolgt:
- ein aus der aktuellen Fahrzeugbeschleunigung und/oder aus einer neu vorgegebenen gewünschten Fahrzeugbeschleunigung berechnetes notwendiges Drehmoment des Verbrennungsmotors (3) nach dem Gangwechsel, um die aktuelle Fahrzeugbeschleunigung oder eine vorgegebene relativ verminderte Fahrzeugbeschleunigung erreichen oder beibehalten zu können, kann vom Verbrennungsmotor (3) zur Verfügung gestellt werden;
- der prognostizierte Kraftstoffverbrauch des Verbrennungsmotors (3) nach dem Gangwechsel ist um ein vorgegebenes Ausmaß geringer, als der aktuelle Kraftstoffverbrauch des Verbrennungsmotors (3).

2. Verfahren gemäß Anspruch 1, **dadurch gekennzeichnet, dass** der Gangwechsel durch Ausgabe von Schaltsignalen durch eine Steuervorrichtung erfolgt, und die Steuervorrichtung ein Grundprogramm aufweist, gemäß welchem ein Schaltsignal zum Schalten in den nächst höheren Gang bei Vorliegen der oberen Grenzgeschwindigkeit (15) und ein Schaltsignal zum Schalten in den nächst niedrigeren (14) Gang bei Vorliegen der unteren Grenzgeschwindigkeit (14) erzeugt werden, und die Steuervorrichtung ein zusätzliches Softwaremodul zu dem Grundprogramm oder in dem Grundprogramm aufweist, mittels welchem ein zusätzliches Schaltsignal zum Schalten in den nächst höheren Gang erzeugt wird, wenn bei Vorliegen der Bedingungen gemäß Schritt 1.4 die obere Grenzgeschwindigkeit (15) noch nicht erreicht ist.

3. Verfahren gemäß einem der Ansprüche 1 oder 2, **dadurch gekennzeichnet, dass** bei Vorliegen der Bedingungen gemäß Schritt 1.4 die obere Grenzgeschwindigkeit (15) vorübergehend auf die aktuelle Geschwindigkeit reduziert wird.

4. Verfahren gemäß einem der Ansprüche 1 bis 3, **dadurch gekennzeichnet, dass** die Berechnung des notwendigen Drehmoments des Verbrennungsmotors (3) nach dem Gangwechsel in einem dem Verbrennungsmotor (3) zugeordneten Motorkennfeld (4) für einen Arbeitspunkt mit derselben Verbrennungsmotorleistung erfolgt oder, wenn dieser nicht erreichbar ist, für einen Arbeitspunkt auf der Volllastkennlinie des Verbrennungsmotors (3).

5. Verfahren gemäß einem der Ansprüche 1 bis 4, **dadurch gekennzeichnet, dass** der aktuelle Kraftstoffverbrauch und der prognostizierte Kraftstoffverbrauch aus einem, insbesondere in einem Verbrennungsmotorsteuergerät (5) und/oder Getriebesteuergerät (2) hinterlegten Verbrauchskennfeld des Verbrennungsmotors (3) ermittelt wird.

6. Verfahren gemäß Anspruch 5, **dadurch gekennzeichnet, dass** das Verbrauchskennfeld des Verbrennungsmotors (3) verschiedenen Wertepaaren aus Drehmoment und Drehzahl des Verbrennungsmotors (3) Verbrauchswerte des Verbrennungsmotors (3) zuordnet.

7. Verfahren gemäß Anspruch 6, **dadurch gekennzeichnet, dass** die Verbrauchswerte als Funktion oder in Abhängigkeit weiterer Betriebsparameter des Fahrzeugs, insbesondere von Wirkungsgraden des Automatgetriebes (1) in verschiedenen Gängen und/oder bei verschiedenen Drehzahlen oder Drehzahlverhältnissen des Getriebeeingangs (13) und/oder des Getriebeausgangs (6), oder von Umgebungsparametern, vorgegeben werden.

8. Verfahren gemäß einem der Ansprüche 1 bis 7, **dadurch gekennzeichnet, dass** ein Mehrverbrauch durch den Schaltvorgang selbst berechnet oder ausgelesen wird, und ein Gangwechsel des Automatgetriebes (1) in Abhängigkeit dieses Mehrverbrauchs erfolgt.

9. Verfahren gemäß Anspruch 8, **dadurch gekennzeichnet, dass** aus dem Mehrverbrauch und dem prognostizierten Kraftstoffverbrauch des Verbrennungsmotors (3) nach dem Gangwechsel eine energetische Amortisationszeit berechnet wird, innerhalb von welcher nach dem Gangwechsel der Motorverbrauch wieder gegenüber dem Verbrauch vor dem Gangwechsel eingespart würde, und der Gangwechsel in Abhängigkeit der berechneten energetischen Amortisationszeit erfolgt, insbesondere wenn diese unterhalb eines vorgegebenen Grenzwertes liegt.

10. Getriebesteuergerät (2) für ein Automatgetriebe eines mit einem Verbrennungsmotor (3) angetriebenen Kraftfahrzeugs, **dadurch gekennzeichnet, dass** dieses derart eingerichtet ist, dass es ein Verfahren gemäß einem der Ansprüche 1 bis 9 ausführt.

## Claims

1. A method for controlling the gear shifting in an automatic transmission (1) of a motor vehicle driven by an internal combustion engine (3), comprising the following steps:
1.1 predefining different upper threshold speeds (15) of the motor vehicle at which at constant or increasing vehicle speed a gear change of the automatic transmission (1) takes place into a next higher gear with a comparatively low transmission ratio between a transmission input (13) and a transmission output (6) of the automatic transmission (1) in comparison with the currently engaged gear;
1.2 predefining different lower threshold speeds (14) of the motor vehicle at which at decreasing vehicle speed a gear change of the automatic transmission (1) takes place into a next lower gear with a comparatively large transmission ratio between the transmission input (13) and the transmission output (6) in comparison with the currently engaged gear, wherein
1.3 one or each upper threshold speed (15) is assigned a lower threshold speed (14) which, to form a shift hysteresis, lies below the upper threshold speed (15) by a predefined difference;
**characterized in that**
1.4 in the presence of the following conditions, a gear change of the automatic transmission (1) into a next higher gear takes place prematurely at constant or increasing vehicle speed already at the lower threshold speed (14) or at a speed between the lower threshold speed (14) and upper threshold speed (15):
- the internal combustion engine (3) can provide a required torque of the internal combustion engine (3) after the gear change, calculated from the current vehicle acceleration and/or from a newly predefined desired acceleration of the combustion engine, in order to enable to attain or maintain the present vehicle acceleration or a predefined relatively reduced vehicle acceleration;
- the predicted fuel consumption of the internal combustion engine (3) after the gear change is lower than the present fuel consumption of the internal combustion engine (3) by a predefined amount.

2. A method according to claim 1, **characterized in that** the gear change occurs by the output of switching signals by a control apparatus, and the control apparatus has a basic program according to which a switching signal is generated for shifting into the next higher gear in the presence of the upper threshold speed (15) and a switching signal for shifting to the next lower (14) gear in the presence of the lower threshold speed (14), and the control apparatus comprises an additional software module for the basic program or in the basic program, by means of which an additional switching signal will be generated for shifting to the next higher gear when under the presence of the conditions according to step 1.4 the upper threshold speed (15) has not yet been reached.

3. A method according to one of the claims 1 or 2, **characterized in that** in the presence of the conditions according to step 1. 4 the upper threshold speed (15) is reduced temporarily to the current speed.

4. A method according to one of the claims 1 to 3, **characterized in that** the calculation of the necessary torque of the internal combustion engine (3) after the gear change occurs in an engine characteristic map (4) assigned to the internal combustion engine (3) for an operating point with the same combustion engine power or, if such an operating point cannot be reached, for an operating point on the full-load characteristic curve of the internal combustion engine (3).

5. A method according to one of the claims 1 to 4, **characterized in that** the current fuel consumption and the predicted fuel consumption are determined from a consumption characteristic map of the internal combustion engine (3), especially stored in a combustion engine control device (5) and/or transmission control device (2).

6. A method according to claim 5, **characterized in that** the consumption characteristic map of the internal combustion engine (3) assigns consumption values of the internal combustion engine (3) to various value pairs of torque and speed of the internal combustion engine (3).

7. A method according to claim 6, **characterized in that** the consumption values are further predetermined as a function or depending on further operating parameters of the vehicle, especially depending on efficiencies of the automatic transmission (1) in various gears and/or at different speeds or speed ratios of the transmission input (13) and/or the transmission output (6), or ambient parameters.

8. A method according to one of the claims 1 to 7, **characterized in that** an additional consumption by the shifting process itself will be calculated or read out, and a gear change of the automatic transmission (1) occurs depending on this additional consumption.

9. A method according to claim 8, **characterized in that** an energetic amortization period is calculated from the predicted fuel consumption and the predicted additional fuel consumption after the gear change, within which the engine consumption would be saved after the gear change relative to the consumption before the gear change, and the gear change occurs depending on the calculated energetic amortization period, especially if it lies beneath a predetermined threshold value.

10. A transmission control device (2) for an automatic transmission of a motor vehicle driven by an internal combustion engine (3), **characterized in that** it is set up in such a way that it carries out a method according to one of the claims 1 to 9.

## Revendications

1. Procédé pour contrôler le changement de rapport dans une boîte de vitesses automatique (1) d'un véhicule à moteur propulsé par un moteur à combustion interne (3), comprenant les étapes suivantes :
1.1 fixation de différentes vitesses limites supérieures (15) du véhicule à moteur auxquelles, si la vitesse du véhicule est constante ou augmente, un changement de rapport de la boîte automatique (1) a lieu vers le rapport directement supérieur ayant une plus petite multiplication entre une entrée de transmission (13) et une sortie de transmission (6) de la boîte automatique (1) que le rapport passé à ce moment ;
1.2 fixation de différentes vitesses limites inférieures (14) du véhicule à moteur auxquelles, si la vitesse du véhicule baisse, un changement de rapport de la boîte automatique (1) a lieu vers un rapport immédiatement inférieur ayant une multiplication plus élevée entre l'entrée de transmission (13) et la sortie de transmission (6) que le rapport passé à ce moment,
1.3 une ou chaque vitesse limite supérieure (15) étant associée à une vitesse limite inférieure (14) qui se situe à une différence prédéterminée en dessous de la vitesse limite supérieure (15) afin de créer une hystérésis de changement de rapport,
**caractérisé en ce que**
1.4 si les conditions suivantes sont remplies, lorsque la vitesse du véhicule est constante ou augmente, un changement de rapport de la boîte automatique (1) vers un rapport directement supérieur se produit prématurément dès la vitesse limite inférieure (14) ou à une vitesse comprise entre la vitesse limite inférieure (14) et la vitesse limite supérieure (15) :
- si un couple du moteur à combustion interne (3) calculé à partir de l'accélération actuelle du véhicule et/ou calculé à partir d'une nouvelle accélération souhaitée du véhicule prédéterminée peut être délivré par le moteur à combustion interne (3) après le changement de rapport afin d'atteindre ou de maintenir l'accélération actuelle du véhicule ou une accélération du véhicule spécifiée relativement diminuée ;
- si la consommation de carburant du moteur à combustion interne (3) pronostiquée après le changement de rapport est inférieure d'une valeur prédéterminée à la consommation actuelle du moteur à combustion interne (3).

2. Procédé selon la revendication 1, **caractérisé en ce que** le changement de rapport est effectué par l'émission de signaux de changement de rapport d'un dispositif de commande et le dispositif de commande comporte un programme de base selon lequel un signal de changement de rapport pour le passage au rapport directement supérieur est émis si la vitesse limite supérieure (15) est atteinte et un signal de changement de rapport pour le passage au rapport directement inférieur (14) est émis si la vitesse limite inférieure (14) est atteinte, et le dispositif de commande comprend un module logiciel complémentaire du programme de base ou inclus dans le programme de base au moyen duquel un signal de changement de rapport supplémentaire pour le passage au rapport directement supérieur est émis quand la vitesse limite supérieure (15) n'est pas encore atteinte, lorsque les conditions de l'étape 1.4 sont remplies.

3. Procédé selon l'une des revendications 1 ou 2, **caractérisé en ce que** lorsque les conditions de l'étape 1.4 sont remplies, la vitesse limite supérieure (15) est temporairement réduite à la vitesse actuelle.

4. Procédé selon l'une des revendications 1 à 3, **caractérisé en ce que** le couple du moteur à combustion interne (3) nécessaire après le changement de rapport est calculé dans un champ caractéristique du moteur (4) associé au moteur à combustion interne (3) pour un point de travail au même rendement du moteur à combustion interne ou, si celui-ci ne peut pas être atteint, pour un point de travail sur la courbe caractéristique à plein régime du moteur à combustion interne (3).

5. Procédé selon l'une des revendications 1 à 4, **caractérisé en ce que** la consommation actuelle de carburant et la consommation de carburant pronostiquée sont déterminées à partir d'un champ caractéristique de consommation du moteur à combustion interne (3), enregistré en particulier dans une unité de commande interne (5) du moteur à combustion et/ou une unité de commande de la transmission (2).

6. Procédé selon la revendication 5, **caractérisé en ce que** le champ caractéristique de consommation du moteur à combustion interne (3) associe différentes paires de valeurs de couple et de vitesse de rotation du moteur à combustion interne (3) à des valeurs de consommation du moteur à combustion interne (3).

7. Procédé selon la revendication 6, **caractérisé en ce que** les valeurs de consommation sont prédéfinies en fonction d'autres paramètres de fonctionnement du véhicule, en particulier de taux de rendement de la boîte automatique (1) à différents rapports et/ou différentes vitesses de rotation ou différents régimes de l'entrée de transmission (13) et/ou de la sortie de transmission (6) ou de paramètres d'environnement.

8. Procédé selon l'une des revendications 1 à 7, **caractérisé en ce qu'**une surconsommation est calculée ou lue par le processus de changement de rapport et un changement de rapport de la boîte automatique (1) a lieu en fonction de cette surconsommation.

9. Procédé selon la revendication 8, **caractérisé en ce que** la surconsommation et la consommation de carburant pronostiquée du moteur à combustion interne (3) après le changement de rapport sont utilisées pour calculer une durée d'amortissement énergétique pendant laquelle, après le changement de rapport, la consommation du moteur redeviendrait économique par rapport à la consommation avant le changement de rapport, et le changement de rapport a lieu en fonction de la durée d'amortissement énergétique calculée, en particulier si celle-ci se situe en dessous d'une valeur limite prédéfinie.

10. Unité de commande de la transmission (2) pour une boîte de vitesses automatique d'un véhicule à moteur propulsé par un moteur à combustion interne (3), **caractérisée en ce qu'**elle est conçue pour exécuter un procédé selon l'une des revendications 1 à 9.
